# EUROPEAN PATENT SPECIFICATION

(11) **EP 2 782 828 B1**
(45) Date of publication and mention of the grant of the patent: **21.09.2016**
(21) Application number: 12808504.0
(22) Date of filing: 26.11.2012
(51) Int. Cl.: B64D 1/22, B64F 5/00

(54) **TEST APPARATUS FOR AVIONIC SENSORS AND METHOD OF TESTING AVIONIC SENSORS**
TESTAPPARATUR UND TESTVERFAHREN FÜR AVIONIKSENSOREN
APPAREIL ET PROCÉDÉ POUR TESTER DES CAPTEURS D'AVIONIQUE

(30) Priority: 25.11.2011 IT MI20112145
(43) Date of publication of application: 01.10.2014
(73) Proprietor: FINMECCANICA - Società per azioni, Roma (IT)
(72) Inventor: BOSCO, Oscar, I-20146 Milano (IT); MANCASTROPPA, Fabrizio, I-20161 Milano (IT); TONELLI, Giancarlo, I-22070 Cassina Rizzardi (IT); TRAVELLA, Paolo Iulius, I-22010 Carlazzo (IT); APRILE, Angelo, I-27010 Giussago (IT)
(74) Representative: Bernotti, Andrea
(86) International application number: PCT/IB2012/056744
(87) International publication number: WO 2013/076708

(56) References cited:
- WO-A1-2010/010420
- WO-A2-02/075235
- US-A- 5 428 530
- US-A1- 2011 254 301

## Description

### TECHNICAL FIELD

The present invention relates to a test apparatus for avionic sensors and to a method for testing avionic sensors.

### BACKGROUND ART

As is known, many onboard aircraft instruments require test campaigns before being installed for use. In particular, radar sensors and other avionic sensors may be tested in flight by using specially provided pods that are mounted on aircraft, possibly modified for the purpose. In this way, it is expected to have the opportunity to test the functionality of the equipment in conditions similar to the effective conditions of use for which the equipment has been designed.

As a rule, test pods for avionic sensors are fixed to the wing of an aircraft, for example, in place of a tank or a weapon, in the case of military aircraft.

This type of test pod is effective, but generally involves substantial costs, which are sometimes difficult to bear. In fact, the purchase or long-term renting of a suitable aeroplane for this purpose is extremely expensive. In addition, a test pod hooked to the wing of a subsonic plane or even more so to the wing of a supersonic plane must meet stringent aerodynamic and weight requirements, in order to avoid critical situations during flight. In addition to the intrinsic cost associated with designing pods with such requirements, often it is not possible to test more than one sensor at a time. Test campaigns are therefore long, require a large number of flights and, in consequence, are expensive.

Alternatively, the sensors to be tested could be installed directly on aeroplanes specifically modified to perform the tests. However, the maintenance and modification costs of an aeroplane are extremely high in this case as well.

WO 02/075235 A discloses a stealth airborne suspended operating system, that includes a suspension to an aircraft, e.g. a helicopter and a platform, suspended from the suspension device. An operating system, such as an imaging sensor, is carried by the platform.

### DISCLOSURE OF INVENTION

The object of the present invention is to provide a test apparatus for avionic sensors and a method of testing avionic sensors that enable the described limitations to be overcome and, in particular, allow avionic sensors to be tested at lower costs than those incurred with known test pods.

According to the present invention, a test apparatus for avionic sensors and method of testing avionic sensors are provided as defined in claims 1 and 11 respectively.

### BRIEF DESCRIPTION OF THE DRAWINGS

For a better understanding of the invention, an embodiment will now be described, purely by way of a non-limitative example and with reference to the attached drawings, where:
- Figure 1 is a side view of a test apparatus for avionic sensors according to an embodiment of the present invention and including an avionic sensor test pod;
- Figure 2 is a plan view of the avionic sensor test pod in Figure 1;
- Figure 3 is a schematic, sectional side view, along a longitudinal plane, of the avionic sensor test pod in Figure 1; and
- Figure 4 is a simplified block diagram of part of the test apparatus for avionic sensors in Figure 1.

### BEST MODE FOR CARRYING OUT THE INVENTION

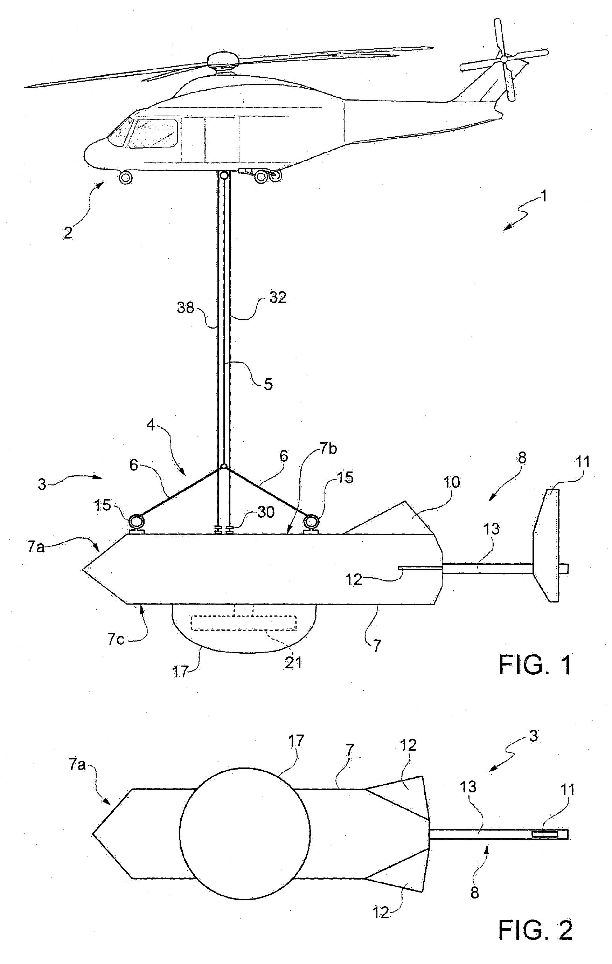

With reference to Figures 1 to 3, a test apparatus for avionic sensors, indicated as a whole by reference numeral 1, comprises a helicopter 2 and an avionic sensor test pod 3 connected to the helicopter 2 by a cable suspension system 4. In particular, the cable suspension system 4 comprises a main cable 5 and a plurality of ropes 6, each one connected between the main cable 5 and a respective mounting point on the pod 3.

In one embodiment, the main cable 5 is a metal cable, possibly fastened to a winch (not shown for simplicity) on board the helicopter 2.

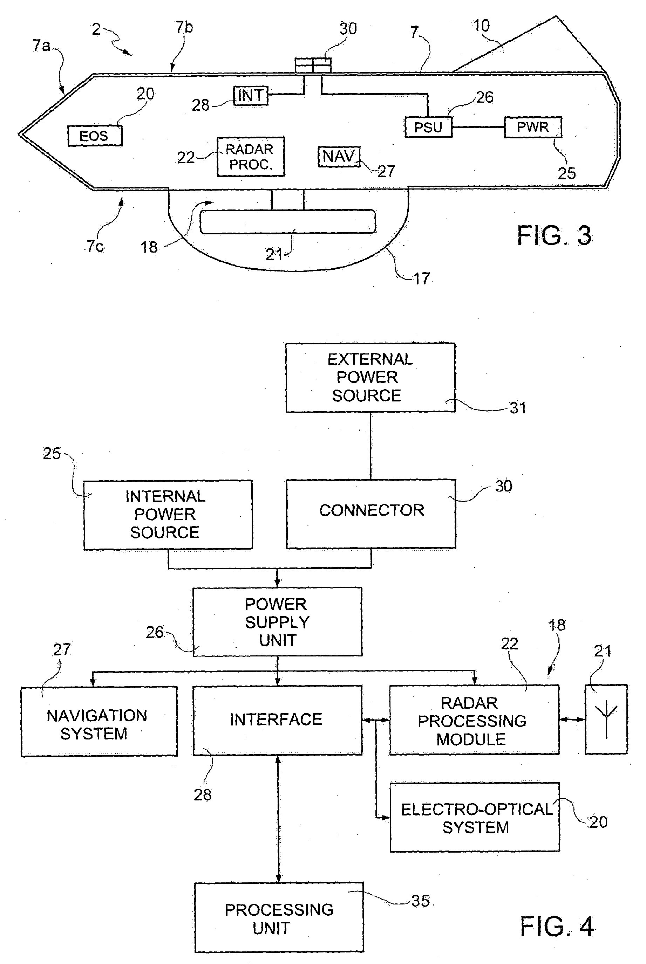

The pod 3 comprises a casing 7, inside which one or more avionic sensors to be tested are housed (Figure 3).

The casing 7 (Figures 1-3) has the form of an elongated box-like body, streamlined at the end that defines the nose 7a. The casing 7 may be made, for example, of aluminium, steel, fibreglass, carbon fibre or other similar materials.

At the opposite end from the nose 7a, the casing 7 is equipped with a tail assembly 8, which has the purpose of avoiding rotation of the pod 3 during flight, in particular around the yaw axis.

In one embodiment, the tail assembly 8 comprises a main fin 10 (Figures 1 and 3), an additional fin 11 (Figures 1 and 2) and stabilizers 12 (Figure 2). The main fin 10 and the stabilizers 12 are fastened directly to the casing 7. The additional fin 11 is instead placed at one end of a support bar 13 that projects rearwards from the tail of the casing 7. Furthermore, the additional fin 11 is supported such that it is aligned with the main fin 10.

As previously mentioned, the casing 7 of the pod 3 is equipped with a plurality of mounting points (indicated by reference numeral 15 in Figure 1) for the cable suspension system 4.

In the embodiment described herein, the mounting points 15 are rings fastened to an upper face 7b of the casing 7 and each one receives one end of a respective rope 6 of the cable suspension system 4. The connection of the ropes 6 to the mounting points 15 is achieved, for example, by spring catches or quick link connectors, not shown here. The mounting points 15 are distributed so that the pod 3 is balanced in flight. The casing 7 is also equipped with a radome 17, which in the embodiment described herein extends towards the outside from a lower face 7c. The radome 17 is defined by a dome made of a rigid material and is substantially transparent to electromagnetic radiation in an operating frequency band of a radar sensor to be tested, for example, between approximately 200 MHz and 1500 MHz. The radome 17 is made, for example, of multi-layered Kevlar, glass and a honeycomb structure, and is shaped to internally house a radar antenna, as described hereinafter.

The avionic sensors contained inside the casing 7 comprise, in one embodiment, a radar system 18 and a tactical or strategic type of electro-optical system 20.

The radar system 18 comprises a radar antenna 21, housed inside the radome 17, and a radar processing module 22, which is located inside the casing 7 and is connected to the radar antenna 21.

The electro-optical system 20 is placed in a forward portion of the casing 7, close to an optical window, and enables optical readings to be taken at great distances (of the order of several tens of kilometres).

The described sensors have been mentioned by way of non-limitative example. The pod 3 could actually comprise different sensors in addition to or in substitution of those mentioned, such as, for example, hyperspectral, IRST, FLIR, satellite data-link and LOS sensors, SIGINT and electronic warfare systems and beacon transponders.

In addition to the sensors, auxiliary devices are also housed inside the casing 7, as shown schematically in Figure 2 and partially in Figure 1.

The auxiliary devices comprise an electric power source 25, a power supply unit 26, a navigation system 27, a high-speed data logger and a communications interface 28. In addition to these, in one embodiment, the pod 3 is equipped with an electrical connector 30 for connecting an external electric power source 31, placed on board the helicopter 2. In this second case, a power cable 32 runs between the electric power source 31 and the connector 30, along the main cable 5.

The power supply unit 26, for example an inverter, converts the electricity supply, provided by the internal electric power source 25 or the electric power source 30 on board the helicopter 2e, and distributes it to the users (sensors and auxiliary devices).

The communications interface 28 , also placed inside the casing 7, couples the avionic sensors of the pod 3 in communication with a processing unit 35 located on board the helicopter 2 and is configured to control the sensors, process the received data and display the results of the readings taken and, in particular, is configured to perform test procedures. In particular, the communications interface 28 connects the processing unit 35 to the radar processing module 22 and the electro-optical system 20, to enable an operator to carry out test procedures during the flight of the helicopter 2 and the pod 3 that is connected to it. In one embodiment, the communications interface 28 is connected to the processing unit 35 by a network cable 38, which runs along the main cable 5. In an alternative embodiment, the connection between the communications interface 28 and the processing unit 35 is wireless.

The described pod advantageously permits a substantial reduction in the costs of the test campaigns of avionic sensors, as well as simplifying the execution thereof.

In fact, the predisposition for hooking up by means of a cable suspension system permits using a helicopter instead of an aeroplane to transport the pod during the tests.

All of the limitations imposed by using aeroplanes are thus overcome, with regard both to the aerodynamic requirements and to size and weight. Furthermore, flying licences and certificates for an aircraft modified for experiments and tests are not necessary.

Therefore, on the one hand, the design of the pod is much simpler and thus less expensive. The aerodynamic requirements of the pod are, in fact, basic ones and may be easily met without the need for complex calculations. It should also be considered that, not infrequently, the aeroplanes used for transporting conventional pods must also be modified to a certain extent. However, modifications of this type are extremely onerous and contribute to making the cost of test campaigns high. The propensity of the pod for cable suspension from a helicopter eliminates the need for any expensive modifications.

On the other hand, the less stringent limitations on size and weight permit simultaneously housing more avionic sensors inside the pod, in preparation for a test campaign. Various avionic sensors can therefore be tested during the same flight. In this way, the duration of test campaigns and the number of flights necessary for testing a plurality of sensors are drastically reduced.

Another considerable advantage derives from the flexibility of using helicopters, along with the simplicity of the suspension system. Helicopters can, in fact, land and take off practically anywhere and connection of the pod requires neither particular expedients, nor special instrumentation. The rope connection system can even be connected to the mounting points of the pod while the helicopter is in flight.

Finally, it is clear that modifications and variants can be made to the apparatus described and illustrated herein without leaving the scope of protection of the present invention, as defined in the appended claims.

## Claims

1. A test apparatus for avionic sensors comprising:
a helicopter (2);
an avionic sensor test pod (3), equipped with at least one avionic sensor (18, 20); and
a cable suspension system (4) connecting the test pod (3) to the helicopter (2);
**characterized by** a processing unit (35) on board the helicopter (2), coupled in communication with the at least one avionic sensor (18, 20) in the test pod (3) and configured to perform test procedures on the at least one avionic sensor (18, 20).

2. An apparatus according to claim 1, wherein the avionic sensor test pod (3) comprises a casing (7) equipped with mounts (15) for cable suspension from a helicopter (2); and wherein the at least one avionic sensor (18, 20) is housed inside the casing (7).

3. The apparatus according to claim 2, wherein the at least one avionic sensor (18, 20) comprises a radar system (18) with a radar antenna (21) and wherein the casing (7) is equipped with a radome (17) for housing the radar antenna.

4. The apparatus according to claim 3, comprising a radar processing module (22) connected to the radar antenna (21) and housed inside the casing (7).

5. The apparatus according to claim 3 or 4, wherein the at least one avionic sensor (18, 20) comprises an electro-optical system (20).

6. The apparatus according to any of the preceding claims, comprising a plurality of avionic sensors (18, 20) housed simultaneously inside the casing (7).

7. The apparatus according to any of the preceding claims, wherein the casing (7) is elongated and has a tail assembly (8).

8. The apparatus according to claim 7, wherein the tail assembly (8) comprises a main fin (10); preferably stabilizers (12); and preferably an additional fin (11) at the rear of the casing (7) and aligned with the main fin (10).

9. The apparatus according to any of the preceding claims, wherein the cable suspension system comprises a number of ropes (6), each connected to a respective mount (15) on the test pod, and a main cable (5) connecting the ropes (6) to the helicopter (2).

10. The apparatus according to any of the preceding claims, comprising an external power source (31) on board the helicopter (2) and a power cable (32) connected to the external power source (31) and extending to the test pod (3).

11. A method of testing avionic sensors, comprising:
housing at least one avionic sensor (18, 20) inside a test pod (3) ;
**characterized by**:
connecting the test pod (3) to a helicopter (2) through a cable suspension system (4); and
lifting the test pod (3) by the helicopter (2).

12. The method according to claim 11, comprising testing at least one avionic sensor (18, 20) during flight.

## Patentansprüche

1. Testvorrichtung für Flugsensoren, die Folgendes aufweist:
einen Helikopter (2);
eine Flugsensortesthalterung (3), die mit mindestens einem Flugsensor (18, 20) ausgerüstet ist; und
ein Kabelaufhängungssystem (4), das die Testhalterung (3) mit dem Helikopter (2) verbindet;
**gekennzeichnet durch** eine Verarbeitungseinheit (35) an Bord des Helikopters (2), die kommunizierend mit dem mindestens einen Flugsensor (18, 20) in der Testhalterung (3) verbunden ist und konfiguriert ist, um Testprozeduren an dem mindestens einen Flugsensor (18, 20) auszuführen.

2. Vorrichtung nach Anspruch 1, wobei die Flugsensortesthalterung (3) ein Gehäuse (7) aufweist, welches mit Befestigungselementen (15) für das Aufhängen von Kabeln von einem Helikopter (2) versehen ist; und wobei der mindestens eine Flugsensor (18,20) in dem Gehäuse (7) aufgenommen ist.

3. Vorrichtung nach Anspruch 2, wobei der mindestens eine Flugsensor (18, 20) ein Radarsystem (18) mit einer Radarantenne (21) aufweist, und wobei das Gehäuse (7) mit einer Radarkuppel (17) zum Aufnehmen der Radarantenne ausgerüstet ist.

4. Vorrichtung nach Anspruch 3, welche ein Radarverarbeitungsmodul (22) aufweist, das mit der Radarantenne (21) verbunden ist und in dem Gehäuse (7) aufgenommen ist.

5. Vorrichtung nach Anspruch 3 oder 4, wobei der mindestens eine Flugsensor (18, 20) ein elektrooptisches System (20) aufweist.

6. Vorrichtung nach einem der vorhergehenden Ansprüche, die eine Vielzahl von Flugsensoren (18, 20) aufweist, die gleichzeitig in dem Gehäuse (7) aufgenommen sind.

7. Vorrichtung nach einem der vorhergehenden Ansprüche, wobei das Gehäuse (7) langgestreckt ist und eine Heckanordnung (8) aufweist.

8. Vorrichtung nach Anspruch 7, wobei die Heckanordnung (8) eine Hauptfinne (10) aufweist; weiter vorzugsweise Stabilisatoren (12); und vorzugsweise eine zusätzliche Finne (11) an dem Hinterteil des Gehäuses (7) und ausgerichtet mit der Hauptfinne (10).

9. Vorrichtung nach einem der vorhergehenden Ansprüche, wobei das Kabelaufhängungssystem eine Anzahl von Seilen (6), wobei jedes davon mit einem entsprechenden Befestigungselement (15) an der Testhalterung verbunden ist, und ein Hauptkabel (5) aufweist, welches die Seile (6) mit dem Helikopter (2) verbindet.

10. Vorrichtung nach einem der vorhergehenden Ansprüche, welche eine externe Leistungsquelle (31) an Bord des Helikopters (2) und ein Leistungskabel (32) aufweist, welches mit der externen Leistungsquelle (31) verbunden ist und sich zu der Testhalterung (3) erstreckt.

11. Verfahren zum Testen von Flugsensoren, welches Folgendes aufweist:
Aufnehmen von zumindest einem Flugsensor (18, 20) in einer Testhalterung (3);
**gekennzeichnet durch**:
Verbinden der Testhalterung (3) mit einem Helikopter (2) **durch** ein Kabelaufhängungssystem (4); und
Anheben der Testhalterung (3) **durch** den Helikopter (2).

12. Verfahren nach Anspruch 11, welches aufweist, zumindest einen Flugsensor (18, 20) während des Flugs zu testen.

## Revendications

1. Appareil de test pour des capteurs avioniques comprenant :
un hélicoptère (2) ;
une nacelle de test de capteur avionique (3), équipée d'au moins un capteur avionique (18, 20) ; et
un système de suspension par câble (4) reliant la nacelle de test (3) à l'hélicoptère (2) ;
**caractérisé par** une unité de traitement (35) à bord de l'hélicoptère (2), couplée en communication avec ledit au moins un capteur avionique (18, 20) dans la nacelle de test (3) et configurée pour effectuer des procédures de test sur ledit au moins un capteur avionique (18, 20).

2. Appareil selon la revendication 1, dans lequel la nacelle de test de capteur avionique (3) comprend un carter (7) équipé d'éléments de montage (15) pour la suspension par câble à un hélicoptère (2) ; et dans lequel ledit au moins un capteur avionique (18, 20) est logé à l'intérieur du carter (7).

3. Appareil selon la revendication 2, dans lequel ledit au moins un capteur avionique (18, 20) comprend un système de radar (18) avec une antenne de radar (21), et dans lequel le carter (7) est équipé d'un radôme (17) pour loger l'antenne de radar.

4. Appareil selon la revendication 3, comprenant un module de traitement de radar (22) connecté à l'antenne de radar (21) et logé à l'intérieur du carter (7).

5. Appareil selon la revendication 3 ou 4, dans lequel ledit au moins un capteur avionique (18, 20) comprend un système électro-optique (20).

6. Appareil selon l'une quelconque des revendications précédentes, comprenant une pluralité de capteurs avioniques (18, 20) logés simultanément à l'intérieur du carter (7).

7. Appareil selon l'une quelconque des revendications précédentes, dans lequel le carter (7) est allongé et comporte un ensemble de queue (8).

8. Appareil selon la revendication 7, dans lequel l'ensemble de queue (8) comprend une ailette principale (10) ; de préférence des stabilisateurs (12) ; et de préférence une ailette supplémentaire (11) à l'arrière du carter (7) et alignée avec l'ailette principale (10).

9. Appareil selon l'une quelconque des revendications précédentes, dans lequel le système de suspension par câble comprend un certain nombre de cordes (6), reliées chacune à un élément de montage (15) respectif sur la nacelle de test, et un câble principal (5) reliant les cordes (6) à l'hélicoptère (2).

10. Appareil selon l'une quelconque des revendications précédentes, comprenant une source de puissance externe (31) à bord de l'hélicoptère (2) et un câble de puissance (32) connecté à la source de puissance externe (31) et s'étendant jusqu'à la nacelle de test (3).

11. Procédé de test de capteurs avioniques, comprenant :
le logement d'au moins un capteur avionique (18, 20) à l'intérieur d'une nacelle de test (3) ;
**caractérisé par** :
la liaison de la nacelle de test (3) à un hélicoptère (2) par l'intermédiaire d'un système de suspension par câble (4) ; et
l'élévation de la nacelle de test (3) par l'hélicoptère (2).

12. Procédé selon la revendication 11, comprenant le test d'au moins un capteur avionique (18, 20) pendant le vol.
